Europäisches Patentamt

European Patent Office

Office européen des brevets

(19)

(11) Numéro de publication : **0 491 604 A1**

# (12) DEMANDE DE BREVET EUROPEEN

(21) Numéro de dépôt : 91403380.8

(22) Date de dépôt : **13.12.91**

(51) Int. Cl.⁵ : **B62D 5/04**

(30) Priorité : **19.12.90 FR 9015908**

(43) Date de publication de la demande :
**24.06.92 Bulletin 92/26**

(84) Etats contractants désignés :
**DE ES GB IT**

(71) Demandeur : **VALEO SYSTEMES D'ESSUYAGE**
**11, rue Faraday**
**F-78180 Montigny-Le-Bretonneux (FR)**

(72) Inventeur : **Tranchon, Georges**
**18, rue du Docteur Plichon**
**F-94000 Creteil (FR)**

(74) Mandataire : **Gamonal, Didier**
**Société VALEO Service Propriété Industrielle**
**30, rue Blanqui**
**F-93406 Saint-Ouen Cédex (FR)**

(54) **Mécanisme d'assistance temporaire pour colonne de direction de véhicules à roues directrices.**

(57) L'invention concerne un mécanisme d'assistance pour colonne de direction de véhicule.

Le mécanisme selon l'invention comporte un réducteur planétaire monté autour de la colonne de direction (50) et attaqué par un moteur d'assistance (59). La couronne extérieure (66) du réducteur est montée libre en rotation autour de l'arbre (50) mais peut être bloqué par un moyen de blocage amovible (64) mobilisé par un électro-aimant (63)

Application : Direction assistée de véhicule.

FIG.2

EP 0 491 604 A1

La présente invention concerne un mécanisme d'assistance temporaire pour colonne de direction de véhicules à roues directrices.

Dans l'art antérieur, on a déjà proposé des mécanismes d'assistance pour colonne de direction de véhicules à roues directrices. Un mécanisme de ce genre comporte en général un moto-réducteur comprenant un moteur électrique et un réducteur. L'arbre de sortie du moteur est couplé par un pignon ou par un autre moyen de transmission de façon à être en liaison mécanique avec la colonne de direction ou avec un pignon monté sur celle-ci. De ce fait, la détection des efforts exercés par le conducteur sur le volant, par exemple par un capteur d'angle volant ou un capteur de couple exercé sur le volant, permet d'élaborer un ordre d'action proportionnelle du moto-réducteur d'assistance sur la colonne de direction.

On a aussi proposé des systèmes d'assistance pneumatiques ou hydrauliques, bien que le mode préféré de réalisation de l'invention exploite un moteur électrique comme source d'énergie mécanique d'assistance de direction.

Dans un premier type d'asservissement, le groupe moto-réducteur ou source d'énergie mécanique d'assistance est astreint à suivre des lois complexes permettant de faire un asservissement dans diverses situations de conduite. De tels dispositifs sont chers, compliqués et de fiabilité relative.

On a donc aussi proposé d'activer temporairement l'assistance pendant des durées d'assistance où les situations de conduite le demande ou pendant lesquelles les efforts du conducteur sont importants.

C'est notamment le cas de la direction assistée en parking. Dans ce cas, le véhicule se déplace à une vitesse lente et le conducteur a souvent besoin d'exercer des efforts importants sur le volant pour ranger son véhicule ou faire des manoeuvres à basses vitesses en général.

Dans ce type de direction assistée, quand la vitesse du véhicule dépasse une certaine valeur limite, l'assistance n'est plus opérante et le conducteur perçoit sur le volant un couple résistant constitué par l'ensemble des actions de la route sur les roues et par l'inertie du groupe moto-réducteur, c'est-à-dire principalement l'inertie des parties tournantes du moto-réducteur.

Cette caractéristique de l'art antérieur est particulièrement désavantageuse car le rapport de multiplication du réducteur fait que l'inertie du rotor du moteur électrique prend une part prépondérante qui réduit le confort apporté par ce genre d'assistance temporaire, alors qu'il présente l'avantage d'être peu coûteux.

La présente invention apporte remède à cet inconvénient de l'art antérieur.

En effet, la présente invention concerne un mécanisme d'assistance temporaire pour colonne de direction d'un véhicule à roues directrices. Le mécanisme d'assistance est du type comportant un moto-réducteur d'assistance dont le rotor est engréné sur un pignon lié à la colonne de direction. Le mécanisme d'assistance se caractérise principalement en ce qu'il comporte un dispositif d'activation qui couple le moteur d'assistance à la colonne de direction seulement pendant la durée d'assistance de la colonne de direction.

Le dispositif d'activation de l'invention s'adapte à un réducteur de type planétaire. Dans un tel réducteur, le couple du moteur d'assistance n'est pas transmis à la colonne de direction sur l'arbre de laquelle est monté le réducteur, si la couronne extérieure dans laquelle sont engrénés les pignons satellites est libre en rotation. Selon l'invention, le dispositif d'activation est constitué d'un moyen de blocage amovible, qui en position de repos est écarté de la couronne et qui, en position active, bloque la rotation de la couronne.

Dans un mode préféré de réalisation, le moyen de blocage est constitué par un frein. En particulier, ce frein est constamment rappelé par son ressort en position de repos loin de la surface externe de la couronne. Par contre, le frein peut être mobilisé par une bobine électromagnétique qui écarte le frein de sa position de repos vers une position dans laquelle la couronne est bloquée et ne peut tourner. La bobine électromagnétique est, lors des durées d'assistance, alimentée par le courant d'excitation fourni par une source de tension continue par l'intermédiaire d'un interrupteur commandé comme un transistor de puissance ou un relais. L'électrode de commande de l'interrupteur reçoit à cet effet un signal de commande d'un calculateur de direction assistée embarqué à bord du véhicule, lors de chaque durée d'assistance.

D'autres caractéristiques et avantages de la présente invention seront mieux compris à l'aide de la description et des dessins annexés qui sont :

– la figure 1 : un schéma général d'une direction assistée de véhicule selon l'art antérieur ;
– la figure 2 : un mode de réalisation d'un mécanisme d'assistance selon l'invention.

Dans un mode préféré de réalisation de l'invention, le mécanisme est du type électromagnétique. Le dispositif d'activation comporte une bobine qui permet de déplacer le moyen qui bloque ou non la rotation de la couronne extérieure du réducteur planétaire. Par déformation d'un système élastique, il est ainsi possible d'activer ou non le mécanisme d'assistance. On remarque d'ailleurs que l'invention présente l'avantage que, dans le cas où l'assistance n'est pas active, en particulier si elle est en panne, la colonne de direction peut toujours être actionnée manuellement.

Dans le mécanisme d'assistance électromagnétique du mode préféré de réalisation de l'invention, celui- ci comporte un réducteur du type planétaire comportant au moins une couronne extérieure qui est libre en rotation quand l'assistance n'est pas active. Dans ce cas, la couronne extérieure qui est libre de l'arbre ou colonne de direction, ne transmet pas l'inertie des parties tournantes du moteur notamment.

A cette fin, le dispositif d'activation comporte au moins un électro-aimant qui attire contre la couronne extérieure, lors des périodes d'activation, une friction ou frein qui, sinon, est constamment rappelée loin de la surface de la couronne extérieure. Quand la couronne extérieure est ainsi bloquée lors de l'excitation de l'électro-aimant, le porte-satellite lié à l'arbre ou colonne de direction peut transmettre le couple d'assistance.

Le pignon de sortie du moteur est relié au pignon d'attaque de la colonne de direction par l'intermédiaire de ce réducteur planétaire dont l'une des parties mobiles peut être immobilisée. Par contre, en l'absence d'excitation de la bobine, la couronne extérieure est libre et le moteur n'est pas couplé à la colonne de direction.

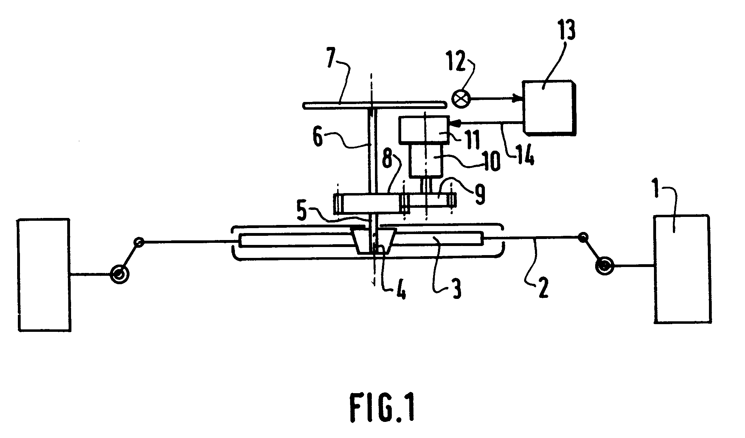

A la figure 1, on a représenté un dispositif d'assistance de direction pour expliquer les éléments principaux de l'invention.

A la figure 1, le train avant du véhicule est un train de roues directrices 1. Les roues directrices sont connectées par des biellettes comme la biellette 2 à un système pignon conique 4 - crémaillère 3, comme il est bien connu de l'art antérieur. Le pignon conique 4 est connecté à la colonne de direction par un arbre 5. Un engrenage ou pignon d'attaque 8 est monté entre les deux parties 6 et 5 de la colonne de direction. D'autre part, l'autre extrémité de la colonne de direction est monté sur un volant 7 actionné par le conducteur. D'autre part, un capteur des efforts du conducteur sur le volant 7 est représenté par un détecteur 12 qui peut mesurer notamment l'angle de rotation du volant, ou encore le couple exercé par le conducteur sur le volant.

Le signal de sortie du capteur 12 est transmis à un calculateur 13 qui permet d'élaborer un ordre d'asservissement sur une sortie 14 transmise à un moto-réducteur 10,11. Le moto-réducteur 11,10 est alimenté en fonction du programme enregistré dans le programmateur 13 de façon à fournir un asservissement variable en fonction des efforts détectés par le détecteur 12 par le biais d'un pignon 9 engrené sur le pignon 8.

Dans les dispositifs à bas coût, le calculateur 13 reçoit un signal (non représenté) détectant la vitesse réelle du véhicule. En fonction de ce signal, le calculateur décide ou non de sélectionner une loi d'asservissement. Mais, si l'assistance n'est pas activée, on constate que l'ensemble de l'équipage mobile : pignon 9 - partie mobile du moto-réducteur 10,11, reste en charge sur la colonne de direction 6 par l'intermédiaire du pignon 8.

La présente invention apporte un remède à cet inconvénient de l'art antérieur.

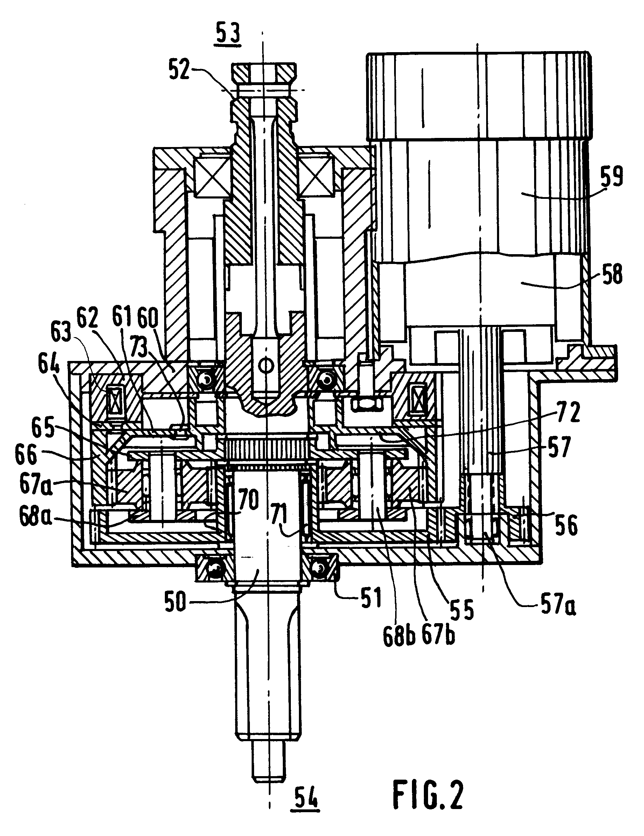

A la figure 2, on a représenté un mode de réalisation d'un dispositif d'activation de type électromagnétique dans lequel un électro-aimant mobilise un frein qui, sinon, est rappelé loin la couronne extérieure du réducteur planétaire sur lequel sont engrenés respectivement le pignon de sortie du moto-réducteur et le pignon d'attaque de la colonne de direction.

A la figure 2, on a représenté le moto-réducteur monté sur la crémaillère de direction.

La colonne de direction 53 est constituée par un arbre en deux parties 50 et 52. La partie 50 reçoit l'action du volant non représenté et la partie 52 est liée au pignon en contact avec la crémaillère de direction (non représentés).

Le moto-réducteur est contenu dans un boîtier 60 et comporte principalement un moteur électrique 59 dont le rotor 58 porte un arbre 57 terminé par un pignon de moteur 56, ledit arbre 57 étant en butée sur un palier 57a, et un réducteur planétaire.

Ce dernier comporte une première couronne 55, dentée sur sa périphérie extérieure et qui est en contact avec le pignon du moteur 56.

L'arbre de direction 53 entre dans le boîtier 60 par un roulement 51. La première couronne 55 est montée libre en rotation sur un palier 71, porté par la partie 50 de l'arbre de direction. A cet effet, la première couronne 55 est montée sur un manchon 70, emmanché sur le palier 71 et qui est muni d'une denture sur laquelle s'engrène des satellites 67a et 67b. Ces derniers sont d'autre part engrenés sur la denture intérieure d'une seconde couronne 66 du réducteur, ou couronne extérieure.

Quand le moteur 59 est arrêté, si le volant est tourné par le conducteur du côté 50 de l'arbre 53 de direction, la première couronne 56 n'est pas entraînée car le manchon 71 masque le mouvement de l'arbre 53 de direction.

Par contre, les satellites 67a et 67b sont montés sur un porte-satellite 65 qui est emmanché sur l'arbre de direction 53.

Selon l'invention, à cet instant le mécanisme d'assistance n'est pas en service. Le dispositif d'activation, qui sera détaillé plus loin, est donc en position de repos. La seconde couronne 56 est donc libre en rotation et à cause du couple d'inertie du moteur 59, la première couronne 55 ne tourne pas non plus. Il s'ensuit que ce couple résistant n'est pas transmis à la colonne de direction, même si les satellites roulent sur les deux couronnes 66 et 55.

Quand le dispositif d'activation est placé en position active, le moyen de blocage, réalisé ici par une friction ou frein tel qu'il sera décrit plus loin, est mis au contact de la seconde couronne 66 qui est ainsi empêchée de tourner autour de l'arbre 50.

Quand le moteur 58 démarre, la première couronne 55 est entraînée par la rotation du pignon 56 du moteur 58. La première couronne 55 tourne indépendamment de la rotation manuelle exercée par le conducteur sur le volant sur l'arbre de direction 53. La rotation de la première couronne 55 est transmise aux satellites 67a et 67b par le manchon 70. Comme la seconde couronne ou couronne externe 66 est bloquée en rotation, on constate que le couple moteur est transmis au porte-satellite attaché à l'arbre de direction, puisque comme la couronne externe est bloquée, les satellites qui tournent sur leurs axes 68a et 68b sont contraints de se déplacer.

On va maintenant décrire un mode de réalisation préféré d'un moyen de blocage amovible constitué par un frein. A la figure 2, la seconde couronne ou couronne extérieure 66 comporte un fond ou voile 72 qui relie notamment la partie dentée à un roulement ou palier sur l'arbre de rotation 50. La couronne 66 est donc libre en rotation autour de l'arbre 50. Le fond ou voile 72 porte un ressort 61 qui est fixé à une extrémité par un rivet 73 au fond 72 et à l'autre extrémité à une friction 64 constituée par un anneau à section rectangulaire. Le ressort est formé de telle sorte que la friction 64 est, en position de repos, écartée de la face en regard du voile 72. Cet écart est typiquement de quelques dixièmes de millimètres. En vis-à-vis, on a disposé et lié sur le boîtier 60, une bobine solénoïdale en forme de tore autour de l'arbre de direction 50. L'anneau de friction 64 étant réalisé en un matériau magnétique, quand la bobine 63 est parcourue par un courant d'excitation, l'anneau s'écarte de sa position de repos et vient en friction sur la surface en regard du boîtier annulaire dans lequel est contenu la bobine 63. De ce fait, la couronne extérieure 66 est empêchée de tourner.

On remarque que le champ magnétique étant proportionnel au courant d'excitation, comme le couple de freinage est proportionnel au champ magnétique, on dispose d'un moyen pour contrôler la quantité instantanée d'énergie mécanique d'assistance transmise du moteur 59 à l'arbre de direction 50. On évite ainsi les phénomènes de pompage ou d'à-coups sur la colonne de direction. Dans ce mode de réalisation, le calculateur de direction assistée émet, en fonction des mesures 12 comme celles de la vitesse du véhicule, de l'angle de rotation du volant et/ou de la variation instantanée de cet angle du volant, un ordre à une interface disposée entre la bobine 63 et sa source d'alimentation, de façon à générer un signal d'activation adapté. Simultanément, ou avec un déphasage prédéterminé positif ou négatif, le calculateur produit un signal d'activation du moteur, en connectant la source d'alimentation électrique par un relais ou un transistor de puissance interposé entre la source (batterie du véhicule) et le moteur électrique. L'interface pilotant la bobine 63 est connectée de façon à fournir un courant d'excitation dont la forme d'onde correspond à l'évolution désirée du couple d'assistance. La forme d'onde est représentée par la courbe d'évolution du courant d'excitation en fonction du temps. Le calculateur détermine ainsi une rampe de montée du courant depuis une valeur où la bobine n'active pas le dispositif jusqu'à une valeur nominale sous laquelle le dispositif est activé, rampe qui démarre à l'instant de début d'assistance. De même, avant la fin de la durée d'assistance, le calculateur peut déterminer une rampe de descente.

Dans un mode de réalisation, l'interface est constituée par un transistor de puissance dont le chemin drain-source est interposé entre la source et une entrée de la bobine 63. L'autre borne de la bobine est à la masse. L'électrode de grille reçoit une tension $V_{GS}$ de commande qui règle au cours du temps la résistance entre le drain et la source. De ce fait, le courant de la bobine peut être commandé sous une rampe de montée, une zone de maintien à sa valeur nominale, puis une rampe de descente. Pour ce faire, l'électrode de grille est connectée à un générateur de tension programmable, mis à zéro et démarré par un ordre du calculateur et qui alimente l'électrode de grille avec une tension de commande $V_{GS}$ prédéterminée.

On remarque que l'invention a été décrite dans un mode de réalisation particulier. D'autres formes d'exécution peuvent être envisagées sans sortir du cadre de la protection accordée par les revendications annexées.

## Revendications

1) Mécanisme d'assistance temporaire pour colonne de direction d'un véhicule à roues directrices, du type comportant un moto-réducteur d'assistance dont le rotor est engréné sur un pignon lié à la colonne de direction, caractérisé principalement en ce qu'il comporte un dispositif d'activation qui couple le moteur d'assistance à la colonne de direction seulement pendant la durée d'assistance de la colonne de direction.

2) Mécanisme selon la revendication 1 du type comportant un réducteur planétaire, caractérisé en ce que le dispositif d'activation comporte un moyen de blocage amovible (63,64,61) de la rotation de la couronne extérieure (66) du réducteur, de façon à ce que, dans une position de repos où l'assistance n'est pas actionnée, la couronne extérieure soit libre en rotation autour de l'arbre de direction (50), et à ce que, dans une position active, la couronne extérieure soit bloquée pour permettre la rotation du porte-satellite (65) lié à l'arbre de direction (50), le porte-satellite étant entraîné par la rotation des satellites (67a,67b) engrénés sur la denture d'un manchon solidaire d'une couronne d'entrée (55) du réducteur actionnée par le pignon (56) d'un moteur d'assistance (59).

3) Mécanisme selon la revendication 2, caractérisé en ce que le moyen de blocage amovible comporte au moins une friction (64) en matériau magnétique, écartée de la couronne extérieure (66) par un ressort (61) qui vient freiner le mouvement de rotation de la couronne par l'effet d'une bobine électromagnétique (63) excitée par un courant fourni par une source de tension connectée à ses bornes par l'intermédiaire d'une interface commandée par un calculateur d'assistance de direction à la détection d'une condition d'assistance.

4) Mécanisme selon la revendication 3, caractérisé en ce que la friction est constituée par un anneau (64) est relié à la couronne extérieure (66) par un ressort (61) et disposé devant une bobine solénoïdale en forme de tore (63) disposée autour de l'arbre de direction et excitée de façon à rapprocher la friction contre la face en regard du boîtier contenant la bobine.

5) Mécanisme selon la revendication 3, caractérisé en ce que le courant d'excitation génèré par l'interface présente une forme d'onde prédéterminée, comme une rampe de montée, une zone de maintien, puis une rampe de descente, séquence exécutée par l'interface pendant la durée d'asservissement, et en ce que simultanément, ou avec un déphasage prédéterminé positif ou négatif, le calculateur produit un signal d'activation du moteur.

FIG.1

**53**

**52**

**59**

**58**

**63** **62** **61 60**

**64** **73**

**65**

**66**

**67a**

**68a**

**70** **71**

**72**

**57**

**56**

**50** **51** **55** **57a**

**68b 67b**

**54**

# FIG.2

Office européen
des brevets

# RAPPORT DE RECHERCHE EUROPEENNE

Numero de la demande

EP    91 40 3380

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | EP-A-0 391 773 (VALEO  ELECTRONIQUE)<br>* colonne 3, ligne 5 - colonne 5, ligne 31 * | 1 | B62D5/04 |
| A | * colonne 5, ligne 58 - colonne 10, ligne 45; revendications 1-13; figures 1-3 *<br>--- | 2,3 | |
| A | EP-A-0 274 541 (MITSUBISHI)<br>* page 5, ligne 4 - page 7, ligne 5; figures 1-4 *<br>--- | 5 | |
| A | FR-A-2 204 169 (A. EHRENREICH  &  CIE)<br>* le document en entier *<br>--- | 1,3,4 | |
| A | US-A-4 724 917 (NAITO  ET  AL.)<br>* le document en entier *<br>----- | 1-3 | |

DOMAINES TECHNIQUES RECHERCHES (Int. Cl.5 )

B62D

Le présent rapport a été établi pour toutes les revendications

| Lieu de la recherche | Date d'achèvement de la recherche | Examinateur |
|---|---|---|
| LA HAYE | 04 MARS 1992 | GEYER J.L. |